# EUROPÄISCHE PATENTSCHRIFT

(11) **EP 3 414 482 B1**
(45) Veröffentlichungstag und Bekanntmachung des Hinweises auf die Patenterteilung: **11.12.2019**
(21) Anmeldenummer: 17705086.1
(22) Anmeldetag: 10.02.2017
(51) Int. Cl.: F16K 31/42, F16K 37/00, F16K 11/16, F16K 31/00

(54) **PROPORTIONALES VENTIL**
PROPORTIONAL VALVE
DISTRIBUTEUR PROPORTIONNEL

(30) Priorität: 11.02.2016 DE 102016102389
(43) Veröffentlichungstag der Anmeldung: 19.12.2018
(73) Patentinhaber: HOERBIGER Flow Control GmbH, 86972 Altenstadt (DE)
(72) Erfinder: GRÖDL, Marcus, 87640 Altdorf (DE); SCHAIBLE, Jochen, 72213 Altensteig (DE); HALLER, Daniel, 70569 Stuttgart (DE); SCHROBENHAUSER, Max, 86971 Peiting (DE); DYMEL, Collin, 70190 Stuttgart (DE); HILDEBRANDT, Benedikt, 70794 Filderstadt (DE); MOLNAR, Györg, 7111 Waldenbuch (DE); NEISS, Sebastian, 70197 Stuttgart (DE)
(74) Vertreter: Grättinger Möhring von Poschinger Patentanwälte Partnerschaft mbB
(86) Internationale Anmeldenummer: PCT/EP2017/052983
(87) Internationale Veröffentlichungsnummer: WO 2017/137548

(56) Entgegenhaltungen:
- EP-A1- 1 832 950
- EP-A2- 1 146 268
- DE-A1-102012 017 713
- US-A- 2 850 330
- US-B1- 6 173 744

## Beschreibung

Die vorliegende Erfindung betrifft ein proportionales Ventil, insbesondere zum Betätigen einer pneumatischen Armatur, wobei das Ventil ein Betätigungsglied, einen Druckluftanschluss zum Anschluss einer Druckluftversorgung, einen Arbeitsanschluss und einen Entlüftungsanschluss aufweist.

Derartige Ventile sind in vielfältiger Weise aus dem Stand der Technik bekannt. Als proportionales Ventil muss es dazu geeignet sein, an dem zum Anschluss der pneumatischen Armatur vorgesehenen Arbeitsanschluss einen möglichst präzise regelbaren (Luft-)Druck zur Verfügung zu stellen. Hierzu werden durch geeignete Betätigung des Ventils mittels des Betätigungsglieds typischerweise verschiedene Ventilstellungen angefahren, mit denen der Arbeitsanschluss wahlweise mit der Druckluftversorgung oder der Entlüftung fluidleitend gekoppelt oder (zum Halten eines am Arbeitsanschluss vorherrschenden Drucks) von beiden entkoppelt wird. Als proportionales Ventil sollen dabei auch Zwischenstellungen zwischen einem vollständigen Belüften und einem vollständigen Entlüften der am Arbeitsanschluss angeschlossenen Armatur möglich sein.

Klarstellend sei erwähnt, dass unter einer pneumatischen Armatur vorliegend beliebige pneumatisch zu betätigende Stellglieder, also insbesondere auch ein pneumatischer Antrieb, zu verstehen sind.

Proportionale Ventile der vorstehend genannten Art sind relativ aufwendig in ihrer Bauart und ihrem Betrieb.

Im Stand der Technik wird dabei häufig auf so genannte Schieberventile zurückgegriffen, bei denen wenigstens ein linear verschiebbares Ventilelement je nach seiner Stellung eine seitlich des Ventilelements angeordnete und den Luftstrom beeinflussende Öffnung entweder (vollständig oder teilweise) freigibt oder verschließt. Im Gegensatz zu Sitzventilen ist hierbei jedoch mangels eines den Fluidfluss wirksam sperrenden Dichtsitzes stets mit einer für präzise Anwendungsfälle nachteiligen Leckage zu rechnen, die im Rahmen der vorliegenden Erfindung vorteilhaft möglichst gering gehalten bzw. ganz vermieden werden sollte.

Aus der DE 10 2012 017 713 A1 ist darüber hinaus bereits ein gattungsgemäßes proportionales Ventil in Form eines Stellungsreglers bekannt, bei dem eine (durch eine als Betätigungsglied fungierende Vorstufe betätigte) Leistungsstufe zwei federnd vorgespannte Sitzventile als Druck-Weg-Wandler umfasst, die von einem gemeinsamen Steuerraum aus mit Druck beaufschlagt werden und die bei Anstieg des im Steuerraum vorherrschenden Drucks sequentiell betätigt werden, um verschiedene Schaltzustände zu realisieren. Aufgrund der dort auf verschiedenen Seiten des gemeinsamen Steuerraums anzuordnenden Sitzventile benötigt der in der DE 10 2012 017 713 A1 beschriebene Stellungsregler einen nicht unerheblichen Bauraum, der mit der vorliegenden Erfindung weiter reduziert werden soll.

Aus der US 2,850,330 ist eine zur Verwendung in einem Bremssystem für Traktoren mit Anhänger vorgesehene Ventilgruppe bekannt, in welcher unter Realisierung von zwei Ventilen insgesamt drei einander nachgeschaltete, jeweils in einer axialen Richtung bewegliche und kaskadenartig verstellbare Ventilelemente vorgesehen sind. Dabei kann mittels des ersten Ventils ein erster Arbeitsanschluss für das Bremssystem des Anhängers wahlweise entlüftet oder mit einem traktorseitigen Druckluftanschluss verbunden werden, während mit dem zweiten Ventil ein zweiter Notfallarbeitsanschluss für das Bremssystem des Anhängers wahlweise entlüftet oder mit einem zweiten traktorseitigen Notfalldruckluftanschluss verbunden werden kann. Bei Variation der Stellung des ersten Ventilelements wird dort von einem ersten Schaltzustand, bei welchem der jeweilige Arbeitsanschluss entlüftet ist, jeweils zu einem zweiten Schaltzustand übergegangen, bei welchem der jeweilige Arbeitsanschluss mit dem traktorseitigen Druckluftanschluss verbunden ist.

Vor diesem Hintergrund ist es die Aufgabe der vorliegenden Erfindung, ein verbessertes proportionales Ventil der eingangs genannten Art bereitzustellen, welches insbesondere einen möglichst geringen (seitlichen) Bauraum benötigt und dabei möglichst zuverlässig und präzise betreibbar ist.

Diese Aufgabe wird durch ein proportionales Ventil nach Anspruch 1 gelöst. Bevorzugte Ausgestaltungen eines solchen Ventils ergeben sich aus den abhängigen Patentansprüchen und der nachfolgenden Beschreibung.

Das erfindungsgemäße Ventil zeichnet sich neben den eingangs genannten Merkmalen dadurch aus, dass das Ventil drei einander nachgeschaltete und jeweils in einer axialen Richtung bewegliche Ventilelemente aufweist, nämlich
- ein durch das Betätigungsglied betätigtes erstes Ventilelement,
- ein zweites Ventilelement, welches durch das erste Ventilelement betätigt wird und
- ein drittes Ventilelement, welches durch das zweite Ventilelement betätigt wird,
wobei in einer Grundstellung des Ventils das erste Ventilelement vom zweiten Ventilelement und das zweite Ventilelement vom dritten Ventilelement beabstandet sind und innerhalb des Ventils ein zwischen dem ersten Ventilelement und dem zweiten Ventilelement wirksamer erster Dichtsitz und ein zwischen dem dritten Ventilelement und dem Gehäuse wirksamer zweiter Dichtsitz derart ausgebildet und angeordnet sind, dass bei Variation der Stellung des ersten Ventilelements durch das Betätigungsglied und der hierdurch kaskadenartig bewirkbaren Verstellung der axialen Stellungen des ersten, zweiten und dritten Ventilelements verschiedene Schaltzustände zum Entlüften des Arbeitsanschlusses durch dessen Verbindung mit dem Entlüftungsanschluss, zum Belüften des Arbeitsanschlusses durch dessen Verbindung mit dem Druckluftanschluss und zum Halten eines am Arbeitsanschluss anliegenden Drucks durch Absperrung des Arbeitsanschlusses sowohl vom Entlüftungsanschluss als auch vom Druckluftanschluss einstellbar sind, wobei der Schaltzustand zum Halten des am Arbeitsanschluss anliegenden Drucks über einen Verschiebeweg wirksam ist, welcher durch den in der Grundstellung gegebenen Abstand zwischen dem zweiten und dritten Ventilelement vorgegeben ist.

Anders als im weiter oben bereits genannten Stand der Technik werden im Rahmen der vorliegenden Erfindung somit nicht zwei Sitzventile als Bestandteil je eines Druck-Weg-Wandlers durch den Druck in einem gemeinsamen Steuerraum betätigt, sondern es findet vorliegend eine kaskadenartige Verstellung der den Fluidfluss innerhalb des Ventils beeinflussenden Ventilelemente statt, bei der das erste Ventilelement durch das Betätigungsglied und die dem ersten Ventilelemente nachgeschalteten Ventilelemente sukzessive - insbesondere rein mechanisch - durch das jeweils vorherige Ventilelement betätigt werden. Es ist evident, dass aufgrund der axialen Betätigungsrichtung für alle drei Ventilelemente der für ein erfindungsgemäßes Ventil benötigte Bauraum - insbesondere in einer seitlich zur axialen Bewegungsrichtung der Ventilelemente liegenden Richtung - besonders kompakt sein kann.

Ferner kann aufgrund des Umstands, dass innerhalb des Ventils zwei mit jeweils mindestens einem Ventilelement zusammenwirkende Dichtsitze realisiert sind, ein besonders leckagearmer bzw. leckagefreier Betrieb gewährleistet werden, was insbesondere zum Halten eines am Arbeitsanschluss vorherrschenden Drucks von großem Vorteil ist und den pneumatischen Energieverbrauch des Ventils minimal hält. Ferner lässt sich ein erfindungsgemäßes Ventil mit besonders hoher Regelgüte in proportionaler Weise betreiben. Aufgrund der kaskadenartigen Verstellbarkeit des erfindungsgemäßen Ventils können vorteilhaft (beliebige) Zwischenstellungen zwischen "voll belüften" und "voll entlüften" eingenommen werden, was insbesondere die Erzielung einer hohen Positioniergenauigkeit bei der Ansteuerung pneumatischer Armaturen bzw. Antriebe ermöglicht.

Das auf das erste Ventilelement zu dessen Betätigung einwirkende Betätigungsglied eines erfindungsgemäßen Ventils kann dabei in zweckmäßiger Ausgestaltung der vorliegenden Erfindung nach einem hydraulischen, pneumatischen oder elektromechanischen Prinzip arbeiten.

Insbesondere ist jedoch zur Erzielung eines insgesamt möglichst geringen Eigenenergieverbrauchs (elektrisch und pneumatisch) von Vorteil, wenn das Betätigungsglied als pneumatisches Vorsteuerventil ausgebildet ist, welches über eine Steuerdruckkammer mit dem ersten Ventilelement zusammenwirkt. Dabei ist für eine besonders energiesparende Betriebsweise von Vorteil, wenn das Vorsteuerventil einen Piezo-Biegewandler umfasst, wie dies beispielsweise aus der ein geeignetes Vorsteuerventil zeigenden EP 0 943 812 A1 bekannt ist.

Das erfindungsgemäße Ventil kann daher als pneumatischer Stellungsregler mit einer (insbesondere die drei Ventilelemente umfassenden) Leistungsstufe angesehen werden, wobei das erste Ventilelement durch das als Betätigungsglied fungierende Vorsteuerventil betätigt wird. Das Vorsteuerventil kann besonders vorteilhaft als (proportionales) 3/2-Wegeventil ausgestaltet sein.

Bei einem erfindungsgemäßen Ventil kann dann in bevorzugter Weiterbildung der Erfindung ferner vorgesehen sein, dass das erste Ventilelement durch einen Membranteller mit einem sich in axialer Richtung erstreckenden und eine axiale Bohrung aufweisenden Membrantellerschaft gebildet ist, wobei der Membranteller in einer zur Steuerdruckkammer weisenden Richtung federnd vorgespannt ist und zur Verstellung seiner axialen Position in Wirkverbindung mit einer ersten Membran steht, die einseitig mit dem in der Steuerdruckkammer vorherrschenden (durch das Vorsteuerventil geregelten) Steuerdruck beaufschlagt ist.

Der Steuerdruck wirkt somit steuerdruckkammerseitig auf die erste Membran, die dann abhängig von dem sich zwischen beiden Seiten der ersten Membran einstellenden Differenzdruck ausgelenkt wird, was schließlich zur Betätigung, d.h. einer axialen Verschiebung des (über den Membranteller an die erste Membran gekoppelten) ersten Ventilelements in Richtung zum zweiten Ventilelement hin führt.

Ferner ist in weiterer bevorzugter Ausgestaltung der vorliegenden Erfindung vorgesehen, dass das zweite Ventilelement durch einen federnd in einer zum ersten Ventilelement weisenden Richtung vorgespannten Ventilstößel gebildet ist, der je nach axialer Stellung des ersten Ventilelements vom Membrantellerschaft beabstandet ist oder hieran anliegt, wobei der erste Dichtsitz in einer Kontaktfläche zwischen Membrantellerschaft und Ventilstößel ausgebildet ist. Zweckmäßiger Weise ist dabei also entweder auf Seiten des zum Ventilstößel weisenden (freien) Endes des Membrantellerschafts oder am zum Membrantellerschaft weisenden Ende des Ventilstößels eine Dichtfläche ausgebildet, die gemeinsam mit einer hierzu korrespondierenden Dichtkante des Ventilstößels bzw. Membrantellerschafts einen Dichtsitz ausbildet.

In Bezug auf das dritte Ventilelement ist im Rahmen der vorliegenden Erfindung vorteilhaft vorgesehen, dass dieses durch ein Sockelelement gebildet ist, das in einer zum Ventilstößel weisenden Richtung federnd gegen einen zweiten Dichtsitz vorgespannt ist und durch axiale Verschiebung des am Sockelelement zur Anlage gebrachten Ventilstößels von dem zweiten Dichtsitz abhebbar ist.

Insgesamt ergibt sich damit also eine kaskadenartige Verstellbarkeit des erfindungsgemäßen Ventils, bei der in einer Grundstellung, die insbesondere bei entlüfteter Steuerdruckkammer eingenommen wird, jeweils sowohl das erste Ventilelement (Membranteller mit -schaft) vom zweiten Ventilelement (Ventilstößel) als auch das zweite Ventilelement (Ventilstößel) vom dritten Ventilelement (Sockelelement) beabstandet ist. Durch das Betätigungsglied wird dann beim Betrieb des erfindungsgemäßen Ventils zunächst das erste Ventilelement (Membranteller samt -schaft) entgegen seiner Federvorspannung in Richtung zum zweiten Ventilelement (Ventilstößel) verschoben, bis diese im Bereich einer den ersten Dichtsitz ausbildenden Kontaktfläche einander berühren. Bei weiterer Verschiebung des ersten Ventilelements durch das Betätigungsglied werden sodann das erste und zweite Ventilelement gemeinsam in Richtung zum dritten Ventilelement hin verschoben, bis das zweite Ventilelement (Ventilstößel) am dritten Ventilelement (Sockelelement) zur Anlage kommt, so dass schließlich bei einem weiterem Verfahren der Ventilelemente noch das dritte Ventilelement vom zweiten Dichtsitz abhebbar ist, gegen den es federnd vorgespannt ist.

Eine fluidische Verbindung des Arbeitsanschlusses mit dem Entlüftungsanschluss ist dabei- ausgehend von der Grundstellung - vorteilhaft solange gegeben, bis das erste Ventilelement dem zweiten Ventilelement dicht anliegt. Der ab dieser axialen Stellung eingenommene Schaltzustand zum Halten des am Arbeitsanschluss vorherrschenden Drucks bleibt dann über einen (durch den in der Grundstellung gegebenen Abstand zwischen zeitem und drittem Ventilelement) vorgegebenen Verschiebeweg wirksam, bis das zweite Ventilelement am dritten Ventilelement zur Anlage kommt und das dritte Ventilelement von dem zweiten Dichtsitz abhebt. Sodann nimmt das Ventil den Schaltzustand zum Belüften des Arbeitsanschlusses ein.

In bevorzugter Ausgestaltung der vorliegenden Erfindung kann vorgesehen sein, dass eine den ersten und/oder zweiten Dichtsitz bildende und/oder hiermit zusammenwirkende Oberfläche zur Einstellung der Leckagerate und/oder zur Verbesserung des Regelverhaltens aus einem polymeren Material besteht, insbesondere mit vom Dichtungspartner ggf. abweichendem elastischem Verhalten. Insbesondere lassen sich hierdurch besonders feine Übergänge in Bezug auf die für einen Proportionalbetrieb des Ventils benötigten Zwischenstellungen erzielen.

Im Rahmen der Erfindung ist ferner bevorzugt vorgesehen, dass der Entlüftungsanschluss in einen dauerhaft entlüfteten Entlüftungsraum des Ventils mündet, der bei nicht am Ventilstößel anliegendem Membrantellerschaft über die axiale Bohrung des Membrantellerschafts fluidleitend mit dem Arbeitsanschluss verbunden und bei dichter Anlage des Membrantellerschafts am Ventilstößel vom Arbeitsanschluss fluidisch getrennt ist.

Außerdem kann bevorzugt vorgesehen sein, dass der Entlüftungsraum durch die erste Membran und eine zweite Membran begrenzt ist, wobei der (die axiale Bohrung aufweisende) Membrantellerschaft mit seinem freien Ende axial durch die zweite Membran hindurchreicht. So kann - je nachdem ob die axiale Bohrung des Membrantellerschafts durch Beabstandung vom Ventilstößel freigegeben oder durch dichte Anlage am Ventilstößel gesperrt ist - eine fluidleitende Verbindung zwischen Entlüftungsraum und Arbeitsanschluss hergestellt oder gesperrt werden.

Weiterhin ist vorteilhaft vorgesehen, dass ein mit dem Arbeitsanschluss des Ventils verbundener Arbeitsdruckraum durch die zweite Membran und den zweiten Dichtsitz begrenzt ist, wobei der Arbeitsdruckraum je nach Stellung des Membrantellers, des Ventilstößels und des Sockelelements fluidleitend mit dem Druckluftanschluss oder dem Entlüftungsanschluss verbunden oder von Druckluft- und Entlüftungsanschluss getrennt ist.

Zur federnden Vorspannung des Membrantellers und/oder des Sockelelements erweist es sich als zweckmäßig, wenn das bzw. die den Membranteller und/oder das Sockelelement vorspannende(n) Federelement(e) sich jeweils an einem Gehäuse des Ventils abstützen.

In besonders vorteilhafter Weise kann dabei vorgesehen sein, dass der Membranteller mit mindestens drei äquidistant zu einer axialen Mittelachse des Membrantellers (und Membrantellerschafts) angeordneten und um einen paarweise gleichen Winkel relativ zueinander versetzten Federelementen, die sich am Gehäuse des Ventils abstützen, vorgespannt ist. Im Falle von drei Federelementen sind diese also vorteilhaft um jeweils 120° zueinander versetzt. Bei vier Federelementen sind es jeweils 90°, und so weiter.

Ferner kann im Rahmen der vorliegenden Erfindung vorteilhaft auch die zweite Membran zur radialen Lagerung des (axial geführten) Membrantellerschafts beitragen. Daher ist in einer weiteren bevorzugten Weiterbildung des erfindungsgemäßen Ventils vorgesehen, dass der Membranteller, insbesondere im Bereich des Membrantellerschafts, mit der zweiten Membran verbunden ist, wobei die zweite Membran eine radiale Lagerung des axial geführten Membrantellers bewirkt.

Bezüglich der Federvorspannung des Ventilstößels ist in abermals bevorzugter Weiterbildung der vorliegenden Erfindung vorgesehen, dass dieser durch eine am Sockelelement abgestützte Feder in Richtung zum Membrantellerschaft vorgespannt ist. Dies hat den Vorteil, dass dann, wenn der Ventilstößel bereits am Sockelelement anliegt, das den Ventilstößel vorspannende Federelement zur weiteren Verschiebung aller drei Ventilelemente nicht weiter entgegen seiner Federkraft gestaucht werden muss. Daher trägt dann die den Ventilstößel vorspannende Feder nicht zu einem weiteren Anstieg der bei weiterer Verschiebung des ersten, zweiten und dritten Ventilelements zu überwindenden Federkraft bei. Hierdurch lässt sich also das Regelverhalten des erfindungsgemäßen Ventils nochmals verbessern, da zum Abheben des dritten Ventilelements vom zweiten Dichtsitz somit ein geringerer Anstieg des Steuerdrucks in der Steuerdruckkammer vonnöten ist, als dies bei Abstützung der Feder des Ventilstößels am Gehäuse notwendig wäre.

Eine weitere bevorzugte Ausgestaltung der vorliegenden Erfindung sieht vor, dass der unbetätigte Ventilstößel um einen gewissen Verschiebeweg von dem am zweiten Dichtsitz anliegenden Sockelelement entfernt ist. Hierdurch kann insbesondere der zum Halten eines bestimmten Drucks am Arbeitsanschluss vorgesehene Schaltzustand des erfindungsgemäßen proportionalen Ventils klar von den beiden anderen Schaltzuständen zum Be- und Entlüften des Arbeitsanschlusses abgegrenzt werden, was wiederum das Regelverhalten des Ventils verbessert.

Weiterhin erweist es sich im Rahmen der vorliegenden Erfindung als vorteilhaft, wenn die den Membranteller, den Ventilstößel und das Sockelelement vorspannenden Federelemente unterschiedliche und aufeinander abgestimmte Federkennlinien aufweisen, da so das Regelverhalten des Ventils besonders gut an die jeweiligen Anforderungen anpassbar ist. Besonders zweckmäßig ist es angesichts der kaskadenartigen Verstellung, wenn die Federsteifigkeit des das Sockelelement vorspannenden Federelements größer als die Federsteifigkeit des den Ventilstößel vorspannenden Federelements ist und wenn die Federsteifigkeit des den Ventilstößel vorspannenden Federelements größer als diejenige des den Membranteller vorspannenden Federelements ist.

Schließlich kann in bevorzugter Ausgestaltung der vorliegenden Erfindung noch vorgesehen sein, dass das erfindungsgemäße Ventil einen Druckregler zur Einstellung des an einem pneumatischen Eingang des Vorsteuerventils anliegenden Drucks aufweist, wobei der am Eingang des Vorsteuerventils anliegende Druck insbesondere auch aus der am Druckluftanschluss anzuschließenden Druckluftversorgung abgezweigt bzw. gewonnen werden kann.

Nachfolgend wird ein Ausführungsbeispiel der Erfindung anhand der Zeichnung näher erläutert.

Dabei zeigt
- Fig. 1: einen Schnitt durch ein Ausführungsbeispiel eines erfindungsgemäßen Ventils und
- Fig. 2: eine schematische Darstellung zur Anordnung der in dem Ausführungsbeispiel gemäß Fig. 1 das erste Ventilelement vorspannenden Federelemente.

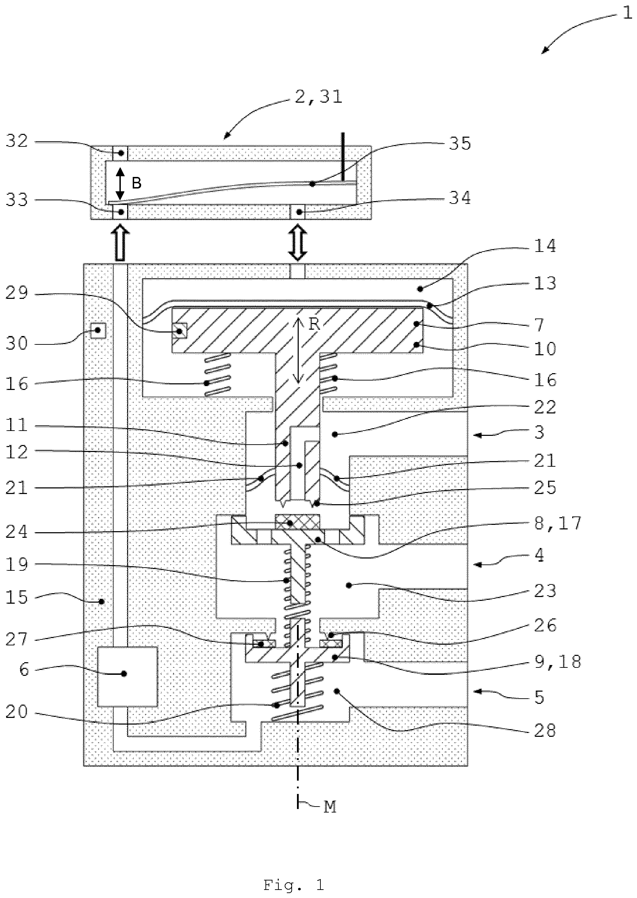

Fig. 1 zeigt ein Ausführungsbeispiel eines erfindungsgemäßen proportionalen Ventils 1, welches ein Betätigungsglied 2 in Art eines pneumatischen Vorsteuerventils 31 aufweist. Der Aufbau dieses Vorsteuerventils 31 wird weiter unten noch näher erläutert.

Das Ventil 1 weist ferner einen Entlüftungsanschluss 3, einen Arbeitsanschluss 4 zum Anschluss einer mit dem Ventil 1 zu betätigenden pneumatischen Armatur (nicht dargestellt) und einen Anschluss 5 für eine Druckluftversorgung mit einem vorgegebenen Luftdruck von beispielsweise 8 bar auf. Ferner ist ein Druckregler 6 vorgesehen, mit welchem aus dem am Anschluss 5 für die Druckluftversorgung vorherrschenden Druck ein demgegenüber geringerer Druck von z.B. 1,2 bar als Eingangsdruck für das als Betätigungsglied 2 dienende pneumatische Vorsteuerventil gewinnbar ist. Da Druckregler als solche im Stand der Technik in vielfältiger Hinsicht bekannt sind und dessen konkrete Ausgestaltung für die vorliegende Erfindung letztlich nicht relevant ist, wird auf eine nähere Beschreibung von dessen Funktionsweise vorliegend verzichtet.

Das Ventil 1 weist ferner drei einander nachgeschaltete und jeweils in einer axialen Richtung gemäß Doppelpfeil R bewegliche Ventilelemente 7, 8, 9 auf.

Dabei umfasst das erste (in Fig. 1 oberste) Ventilelement 7 einen Membranteller 10 und einen Membrantellerschaft 11 mit einer axialen Bohrung 12.

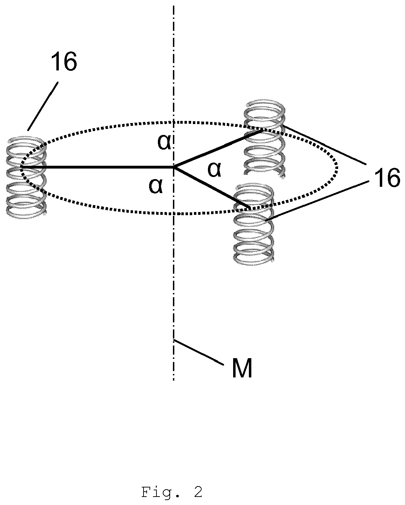

Der Membranteller 10 steht in Wirkverbindung (vorliegend durch eine mechanische Kopplung) mit einer ersten Membran 13, wobei oberhalb der ersten Membran 13 und des Membrantellers 10 ein Steuerdruckraum 14 gebildet ist. Der im Steuerdruckraum 14 vorherrschende Luftdruck wird durch das als Betätigungsglied 2 fungierende Vorsteuerventil 31 geregelt. Ferner ist das erste (durch den Membranteller 10 samt Membrantellerschaft 11 gebildete) Ventilelement 7 in (axialer) Richtung zum Steuerdruckraum 14 hin federnd vorgespannt. Hierfür sind im vorliegenden Ausführungsbeispiel insgesamt drei am Gehäuse 15 des Ventils 1 abgestützte Federelemente (Federn) 16 vorgesehen, von denen in Fig. 1 lediglich eines (links der Mittelachse M) in der Schnittebene liegt, während die anderen beiden Federelemente (von denen nur eines in Fig. 1 erkennbar ist) vor bzw. hinter der Schnittebene liegen. Diese drei Federelemente 16 sind jeweils äquidistant (also mit gleichem radialen Abstand) zur Mittelachse M angeordnet und in der senkrecht zur Mittelachse M gelegenen Ebene um einen paarweise gleichen Winkel α von 120° relativ zueinander (d.h. um die Mittelachse M herum) versetzt, so dass sich eine bezogen auf die axiale Mittelachse M vollkommen symmetrische Vorspannung des ersten Ventilelements 7 in Richtung zur Steuerdruckkammer 14 ergibt. Fig. 2 veranschaulicht diese symmetrische Anordnung der vorliegend insgesamt drei Federelemente 16.

Das zweite Ventilelement 8 wird vorliegend durch einen Ventilstößel 17 und das dritte Ventilelement 9 durch ein Sockelelement 18 gebildet. Dabei ist der Ventilstößel 17 mittels einer sich am Sockelelement 18 abstützenden Feder 19 in Richtung zum ersten Ventilelement 7 (=Membranteller 10 und -schaft 11) vorgespannt, während das Sockelelement 18 seinerseits mittels einer sich am Gehäuse 15 abstützenden Feder 20 vorgespannt ist.

In der in Fig. 1 dargestellten Grundstellung des Ventils 1 sind alle drei axial beweglichen Ventilelemente 7, 8, 9 in gleicher Richtung vorgespannt, dabei jedoch paarweise voneinander beabstandet.

Der Membrantellerschaft 11 ist mit einer zweiten Membran 21 gekoppelt, die den Membrantellerschaft 11 umlaufend dicht umgibt und die den zwischen erster Membran 13 und zweiter Membran 21 befindlichen (dauerhaft entlüfteten) Entlüftungsraum 22, welcher zum Entlüftungsanschluss 3 führt, von einem zum Arbeitsanschluss 4 führenden Arbeitsdruckraum 23 abtrennt. Die zweite Membran 21 kann dabei gleichzeitig zur radialen Lagerung des Membrantellerschafts dienen. Aufgrund des in der Grundstellung des Ventils 1 gegebenen Abstands zwischen dem freien Ende des Membrantellerschafts 11 und dem Ventilstößel 17 ist bei der in Fig. 1 dargestellten Ventilstellung der Arbeitsdruckraum 23 (und somit auch eine am Arbeitsanschluss 4 angeschlossene pneumatische Armatur) entlüftet.

Der Ventilstößel 17 weist auf seiner zum Membrantellerschaft 11 weisenden Oberseite ein als Dichtfläche 24 dienendes polymeres Material auf, an welcher eine Unterkante 25 des Membrantellerschafts 11 unter Bildung eines ersten Dichtsitzes zur Anlage kommen kann. Diese weiche Dichtfläche ermöglicht in Abhängigkeit von der Härte des Polymers eine besonders präzise proportionale Feinregelung bei Verstellung des Ventils in der Nähe des Kontaktbereichs.

Wenn also - durch geeignete Erhöhung des in der Steuerdruckkammer 14 vorherrschenden Drucks - das erste Ventilelement 7 so weit verschoben wird, bis die Unterkante 25 des Membrantellerschafts 11 an der Oberfläche 24 des Ventilstößels 17 dichtend zur Anlage kommt, dann wird die durch die axiale Bohrung 12 des Membrantellerschafts 11 gegebene Verbindung zwischen Entlüftungsraum 22 und Arbeitsdruckraum 23 gesperrt, wodurch die vorherige Entlüftung des Arbeitsdruckraums 23 aufgehoben wird.

Ein zweiter Dichtsitz wird in dem gezeigten Ausführungsbeispiel eines erfindungsgemäßen Ventils 1 gebildet durch eine gehäusefeste und in Fig. 1 nach unten weisende Dichtkante 26, gegen die das als drittes Ventilelement 9 fungierende Sockelelement 18 mittels der Feder 20 vorgespannt ist, wobei hier sockelelementseitig wiederum eine mit der Dichtkante 26 zur Bildung des zweiten Dichtsitzes zusammenwirkende Dichtfläche 27 aus einem polymeren Material vorgesehen ist. Unterhalb des zweiten Dichtsitzes befindet sich ein mit dem Anschluss 5 für die Druckversorgung verbundener Druckversorgungsraum 28, der somit genau dann vom Arbeitsdruckraum 23 fluidisch getrennt ist, wenn das Sockelelement 18 mit seiner Oberseite dicht an der Dichtkante 26 anliegt.

Erst wenn also - durch geeignete Betätigung des ersten Ventilelements 7 mittels des Betätigungsglieds 2 - das erste Ventilelement 7 so weit verschoben wurde, dass das erste Ventilelement 7 am zweiten Ventilelement 8 und das zweite Ventilelement 8 am dritten Ventilelement 9 anliegt, dann führt eine weitere Erhöhung des Steuerdrucks in der Steuerdruckkammer 14 dazu, dass das dritte Ventilelement 9 (=Sockelelement 18) vom zweiten Dichtsitz abgehoben wird, wodurch der Arbeitsdruckraum 23 fluidisch mit der Druckversorgung verbunden wird. Im Rahmen der Betätigung des dritten Ventilelements 9 ist von Vorteil, dass zwischen Ventilstößel 17 und Sockelelement 18 ein harter Anschlag ausgebildet ist.

Das besonders gute Regelverhalten eines erfindungsgemäßen Ventils ergibt sich nicht zuletzt auch aufgrund der im Grundzustand gegebenen Abstände zwischen dem ersten, zweiten und dritten Ventilelement 7, 8, 9, da hierdurch die verschiedenen fluidischen Zustände des Ventils besonders gut differenzierbar und einfach ansteuerbar sind.

Die Regelung eines erfindungsgemäßen Ventils erweist sich - trotz der kaskadenartigen Ausgestaltung - im Übrigen als besonders einfach. Hierzu kann am ersten Ventilelement 7 (z.B. im Bereich des Membrantellerrands) ein Magnetelement 29 vorgesehen sein, so dass unter Verwendung eines geeigneten Sensors 30 die axiale Stellung des ersten Ventilelements 7 präzise bestimmbar ist.

Aufgrund der rein mechanischen Kopplung der drei Ventilelemente 7, 8, 9 und wegen der durch die Lage der Dichtsitze fix vorgegebenen Verfahrwege zwischen den verschiedenen Ventilstellungen, kann eine Regelung des Ventils unter (ausschließlichem) Rückgriff auf die mittels des Sensors 30 ermittelbare (axiale) Stellung des ersten Ventilelements 7 erfolgen.

Fig. 1 zeigt schließlich noch das als Betätigungsglied 2 verwendete pneumatische Vorsteuerventil 31. Dieses ist vorliegend als proportionales 3/2 Wegeventil ausgestaltet.

Es weist einen Druckeingang 33 auf, der vorliegend mit dem vom Druckregler 6 zur Verfügung gestellten Luftdruck bespeist ist. Ferner ist ein (ggfs. mit dem Entlüftungsanschluss 3 des Ventils 1 verbundener) Vorsteuerventilentlüftungsanschluss 32 vorgesehen, sowie ein Vorsteuerventilarbeitsausgang 34, der mit der Steuerdruckkammer 14 des Ventils 1 fluidisch verbunden ist. Mittels eines elektrisch betätigbaren und hierdurch im Bereich seines freien Endes gemäß Doppelpfeil B verschwenkbaren Piezobiegewandlers 35 kann nun der Vorsteuerventilarbeitsausgang 34 wahlweise entlüftet (d.h. fluidisch mit dem Vorsteuerventilentlüftungsraum verbunden) oder teilweise bzw. vollständig mit dem am Druckeingang 33 des Vorsteuerventils 31 vorherrschenden Druck verbunden werden. Das Vorsteuerventil 31 kann also mit besonders hoher Regelgüte und geringem Energiebedarf, wie bereits beschrieben, unter Regelung des in der Steuerdruckkammer 14 vorherrschenden Drucks als Betätigungsglied für das erste Ventilelement 7 des erfindungsgemäßen Ventils 1 dienen.

## Patentansprüche

1. Proportionales Ventil (1), insbesondere zum Betätigen einer pneumatischen Armatur, wobei das Ventil (1) ein Gehäuse (15), ein Betätigungsglied (2), einen Druckluftanschluss (5) zum Anschluss einer Druckluftversorgung, einen Arbeitsanschluss (4) und einen Entlüftungsanschluss (3) aufweist,
wobei das Ventil (1) drei einander nachgeschaltete und jeweils in einer axialen Richtung bewegliche Ventilelemente (7, 8, 9) aufweist, nämlich
- ein durch das Betätigungsglied (2) betätigtes erstes Ventilelement (7),
- ein zweites Ventilelement (8), welches durch das erste Ventilelement (7) betätigt wird, und
- ein drittes Ventilelement (9), welches durch das zweite Ventilelement (8) betätigt wird,
wobei in einer Grundstellung des Ventils (1) das erste Ventilelement (7) vom zweiten Ventilelement (8) und das zweite Ventilelement (8) vom dritten Ventilelement (9) beabstandet sind und innerhalb des Ventils (1) ein zwischen dem ersten Ventilelement (7) und dem zweiten Ventilelement (8) wirksamer erster Dichtsitz (25) und ein zwischen dem dritten Ventilelement (9) und dem Gehäuse (15) wirksamer zweiter Dichtsitz (26) derart ausgebildet und angeordnet sind,
dass bei Variation der Stellung des ersten Ventilelements (7) durch das Betätigungsglied (2) und der hierdurch kaskadenartig bewirkbaren Verstellung der axialen Stellungen des ersten, zweiten und dritten Ventilelements (7, 8, 9) verschiedene Schaltzustände zum Entlüften des Arbeitsanschlusses (4) durch dessen Verbindung mit dem Entlüftungsanschluss (3), zum Belüften des Arbeitsanschlusses (4) durch dessen Verbindung mit dem Druckluftanschluss (5) und zum Halten eines am Arbeitsanschluss (4) anliegenden Drucks durch Absperrung des Arbeitsanschlusses (4) sowohl vom Entlüftungsanschluss (3) als auch vom Druckluftanschluss (5) einstellbar sind, **dadurch gekennzeichnet, dass** der Schaltzustand zum Halten des am Arbeitsanschluss (4) anliegenden Drucks über einen Verschiebeweg wirksam ist, welcher durch den in der Grundstellung gegebenen Abstand zwischen dem zweiten und dritten Ventilelement (8, 9) vorgegeben ist.

2. Proportionales Ventil nach Anspruch 1,
**dadurch gekennzeichnet,**
**dass** das Betätigungsglied (2) nach einem hydraulischen, pneumatischen oder elektromechanischen Prinzip arbeitet.

3. Proportionales Ventil nach Anspruch 1,
**dadurch gekennzeichnet,**
**dass** das Betätigungsglied (2) als pneumatisches Vorsteuerventil (31) ausgebildet ist, welches über eine Steuerdruckkammer (14) mit dem ersten Ventilelement (7) zusammenwirkt und welches bevorzugt einen Piezo-Biegewandler (35) umfasst.

4. Proportionales Ventil nach Anspruch 3,
**dadurch gekennzeichnet,**
**dass** das erste Ventilelement (7) durch einen Membranteller (10) mit einem sich in axialer Richtung erstreckenden und eine axiale Bohrung (12) aufweisenden Membrantellerschaft (11) gebildet ist, wobei der Membranteller (10) in einer zur Steuerdruckkammer (14) weisenden Richtung federnd vorgespannt ist und zur Verstellung seiner axialen Position in Wirkverbindung mit einer ersten Membran (13) steht, die einseitig mit dem in der Steuerdruckkammer (14) vorherrschenden Steuerdruck beaufschlagt ist.

5. Proportionales Ventil nach Anspruch 4,
**dadurch gekennzeichnet,**
**dass** das zweite Ventilelement (8) durch einen federnd in einer zum ersten Ventilelement (7) hin weisenden Richtung vorgespannten Ventilstößel (17) gebildet ist, der je nach axialer Stellung des ersten Ventilelements (7) vom Membrantellerschaft (11) beabstandet ist oder hieran anliegt, wobei der erste Dichtsitz (25) in der Kontaktfläche zwischen Membrantellerschaft (11) und Ventilstößel (17) ausgebildet ist.

6. Proportionales Ventil nach Anspruch 4 und 5,
**dadurch gekennzeichnet,**
**dass** das dritte Ventilelement (9) durch ein Sockelelement (18) gebildet ist, das in einer zum Ventilstößel (17) weisenden Richtung federnd gegen einen zweiten Dichtsitz (26) vorgespannt ist und durch axiale Verschiebung des am Sockelelement (18) zur Anlage gebrachten Ventilstößels (17) von dem zweiten Dichtsitz (26) abhebbar ist.

7. Proportionales Ventil nach einem der vorangehenden Patentansprüche,
**dadurch gekennzeichnet,**
**dass** eine den ersten und/oder zweiten Dichtsitz bildende und/oder hiermit zusammenwirkende Oberfläche (24, 27) zur Einstellung der Leckagerate und/oder zur Verbesserung des Regelverhaltens aus einem polymeren Material besteht.

8. Proportionales Ventil nach einem der Ansprüche 5 bis 7,
**dadurch gekennzeichnet,**
**dass** der Entlüftungsanschluss (3) in einen dauerhaft entlüfteten Entlüftungsraum (22) des Ventils (1) mündet, der bei nicht am Ventilstößel (17) anliegendem Membrantellerschaft (11) über die axiale Bohrung (12) des Membrantellerschafts (11) fluidleitend mit dem Arbeitsanschluss (4) verbunden und bei dichter Anlage des Membrantellerschafts (11) am Ventilstößel (17) vom Arbeitsanschluss (4) fluidisch getrennt ist.

9. Proportionales Ventil nach Anspruch 8,
**dadurch gekennzeichnet,**
**dass** der Entlüftungsraum (22) durch die erste Membran (13) und eine zweite Membran (21) begrenzt ist, wobei der Membrantellerschaft (11) mit seinem freien Ende axial durch die zweite Membran (21) hindurchreicht.

10. Proportionales Ventil nach Anspruch 9,
**dadurch gekennzeichnet,**
**dass** ein mit dem Arbeitsanschluss (4) des Ventils (1) verbundener Arbeitsdruckraum (23) durch die zweite Membran (21) und den zweiten Dichtsitz begrenzt ist, wobei der Arbeitsdruckraum (23) je nach Stellung des Membrantellers (10), des Ventilstößels (17) und des Sockelelements (18) fluidleitend mit dem Druckluftanschluss (5) oder dem Entlüftungsanschluss (3) verbunden oder von Druckluft- (5) und Entlüftungsanschluss (3) getrennt ist.

11. Proportionales Ventil nach einem der Patentansprüche 4 - 10,
**dadurch gekennzeichnet,**
**dass** den Membranteller (10) und/oder das Sockelelement (18) vorspannende Federelemente (16, 20) sich jeweils an einem Gehäuse (15) des Ventils (1) abstützen.

12. Proportionales Ventil nach Anspruch 11,
**dadurch gekennzeichnet,**
**dass** der Membranteller (10) mit mindestens drei äquidistant zu einer axialen Mittelachse (M) des Membrantellers (10) angeordneten und um einen paarweise gleichen Winkel (α) relativ zueinander versetzten Federelementen (16), die sich am Gehäuse (15) des Ventils (1) abstützen, vorgespannt ist.

13. Proportionales Ventil nach Anspruch 9 oder einem sonstigen direkt oder indirekt auf Anspruch 9 zurückbezogenen Anspruch,
**dadurch gekennzeichnet,**
**dass** der Membranteller (10), insbesondere im Bereich des Membrantellerschafts (11), mit der zweiten Membran (21) verbunden ist, wobei die zweite Membran (21) eine radiale Lagerung des axial geführten Membrantellers (10) bewirkt.

14. Proportionales Ventil nach Anspruch 6 oder einem sonstigen direkt oder indirekt auf Anspruch 6 zurückbezogenen Anspruch,
**dadurch gekennzeichnet,**
**dass** der Ventilstößel (17) durch eine am Sockelelement (18) abgestützte Feder (19) in Richtung zum Membrantellerschaft (10) vorgespannt ist.

15. Proportionales Ventil nach Anspruch 5 oder einem sonstigen direkt oder indirekt auf Anspruch 5 zurückbezogenen Anspruch,
**dadurch gekennzeichnet,**
**dass** der unbetätigte Ventilstößel (18) um einen gewissen Verschiebeweg von dem am zweiten Dichtsitz anliegenden Sockelelement (17) entfernt ist.

16. Proportionales Ventil nach Anspruch 6 oder einem sonstigen direkt oder indirekt auf Anspruch 6 zurückbezogenen Anspruch,
**dadurch gekennzeichnet,**
**dass** die den Membranteller (10), den Ventilstößel (17) und das Sockelelement (18) vorspannenden Federelemente (16, 19,20) unterschiedliche und aufeinander abgestimmte Federkennlinien aufweisen.

17. Proportionales Ventil nach Anspruch 16,
**dadurch gekennzeichnet,**
**dass** die Federsteifigkeit des das Sockelelement (18) vorspannenden Federelements (20) größer als die Federsteifigkeit des den Ventilstößel (17) vorspannenden Federelements (19) ist und dass die die Federsteifigkeit des den Ventilstößel (17) vorspannenden Federelements (19) größer als die Federsteifigkeit des den Membranteller (10) vorspannenden Federelements (16) ist.

18. Proportionales Ventil nach Anspruch 3 oder einem sonstigen direkt oder indirekt auf Anspruch 3 zurückbezogenen Anspruch,
**dadurch gekennzeichnet,**
**dass** das Ventil (1) ferner einen Druckregler (6) zur Einstellung des an einem pneumatischen Eingang (33) des Vorsteuerventils (31) anliegenden Drucks aufweist.

## Claims

1. A proportional valve (1), especially for actuation of a pneumatic fitting, wherein the valve (1) has a housing (15), an actuating element (2), a compressed-air port (5) for connection of a compressed-air supply, a working port (4) and a vent port (3),
wherein the valve (1) has three valve elements (7, 8, 9) connected in series and respectively movable in an axial direction, namely
- a first valve element (7) actuated by the actuating element (2),
- a second valve element (8), which is actuated by the first valve element (7), and
- a third valve element (9), which is actuated by the second valve element (8), wherein, in a basic position of the valve (1), the first valve element (7) is spaced apart from the second valve element (8) and the second valve element (8) from the third valve element (9) and, within the valve (1), a first sealing seat (25) acting between the first valve element (7) and the second valve element (8) and a second sealing seat (26) acting between the third valve element (9) and the housing (15) are formed and disposed in such a way that,
during variation of the position of the first valve element (7) by the actuating element (2) and of the cascade-like positioning of the axial positions of the first, second and third valve elements (7, 8, 9) that can be achieved hereby, various switched states can be set for venting of the working port (4) by placing it in communication with the vent port (3), for air admission to the working port (4) by placing it in communication with the compressed-air port (5) and for holding a pressure present at the working port (4) by shutting off the working port (4) both from the vent port (3) and the compressed-air port (5),
**characterized in that**
the switched state for holding the pressure present at the working port (4) is active over a displacement path, which is given by the distance between the second and the third valve element (8, 9) in the basic position.

2. The proportional valve of claim 1, **characterized in that** the actuating element (2) operates according to a hydraulic, pneumatic or electromechanical principle.

3. The proportional valve of claim 1, **characterized in that** the actuating element (2) is formed as a pneumatic pilot valve (31), which cooperates via a control pressure chamber (14) with the first valve element (7) and which preferably comprises a piezo-bending transducer (35).

4. The proportional valve of claim 3, **characterized in that** the first valve element (7) is formed by a diaphragm disk (10) with a diaphragm-disk shank (11) that extends in axial direction and is provided with an axial bore (12), wherein the diaphragm disk (10) is spring-preloaded in a direction pointing toward the control pressure chamber (14) and for positioning of its axial position is in operative connection with a first diaphragm (13), which is pressurized on one side with the control pressure prevailing in the control pressure chamber (14).

5. The proportional valve of claim 4, **characterized in that** the second valve element (8) is formed by a valve tappet (17), which is spring-preloaded in a direction pointing toward the first valve element (7) and which, depending on axial position of the first valve element (7), is spaced apart from the diaphragm-disk shank (11) or bears thereon, wherein the first sealing seat (25) is formed at the contact face between diaphragm-disk shank (11) and valve tappet (17).

6. The proportional valve of claim 4 and 5, **characterized in that** the third valve element (9) is formed by a base element (18), which is spring-preloaded against a second sealing seat (26) in a direction pointing toward the valve tappet (17) and can be lifted from the second sealing seat (26) by axial displacement of the valve tappet (17) that has been brought into contact on the base element (18).

7. The proportional valve of any of the preceding claims, **characterized in that** a surface (24, 27) forming the first and/or second sealing seat and/or interacting therewith for adjustment of the leak rate and/or for improvement of the regulation behavior is made of a polymer material.

8. The proportional valve of any of claims 5-7, **characterized in that** the vent port (3) discharges into a continuously vented vent chamber (22) of the valve (1), which is fluidically in communication with the working port (4) via the axial bore (12) of the diaphragm-disk shank (11) when the diaphragm-disk shank (11) is not bearing on the valve tappet (17) and is fluidically separated from the working port (4) when the diaphragm-disk shank (11) is in sealing contact on the valve tappet (17).

9. The proportional valve of claim 8, **characterized in that** the vent chamber (22) is bounded by the first diaphragm (13) and a second diaphragm (21), wherein the diaphragm-disk shank (11) extends with its free end axially through the second diaphragm (21).

10. The proportional valve of claim 9, **characterized in that** a working pressure chamber (23) in communication with the working port (4) of the valve (1) is bounded by the second diaphragm (21) and the second sealing seat, wherein the working pressure chamber (23), depending on position of the diaphragm disk (10), of the valve tappet (17) and of the base element (18), is fluidically in communication with the compressed-air port (5) or the vent port (3) or is separated from the compressed-air port (5) and vent port (3).

11. The proportional valve of any of claims 4-10, **characterized in that** spring elements (16, 20) preloading the diaphragm disk (10) and/or the base element (18) are respectively braced on a housing (15) of the valve (1).

12. The proportional valve of claim 11, **characterized in that** the diaphragm disk (10) is preloaded with at least three spring elements (16), which are disposed equidistant from an axial central axis (M) of the diaphragm disk (10), which are offset, in pairs, by the same angle (α) relative to one another and which are braced on the housing (15) of the valve (1).

13. The proportional valve of claim 9 or any further claim being directly or indirectly dependent from claim 9, **characterized in that** the diaphragm disk (10), especially in the region of the diaphragm-disk shank (11), is joined to the second diaphragm (21), wherein the second diaphragm (21) provides radial bearing for the axially oriented diaphragm disk (10).

14. The proportional valve of claim 6 or any further claim being directly or indirectly dependent from claim 6, **characterized in that** the valve tappet (17) is preloaded in the direction of the diaphragm-disk shank (10) by a spring (19) braced on the base element (18).

15. The proportional valve of claim 5 or any further claim being directly or indirectly dependent from claim 5, **characterized in that** the unactuated valve tappet (17) is distant by a certain displacement path from the base element (18) bearing on the second sealing seat.

16. The proportional valve of claim 6 or any further claim being directly or indirectly dependent from claim 6, **characterized in that** the spring elements (16, 19, 20) preloading the diaphragm disk (10), the valve tappet (17) and the base element (18) have spring characteristics that are different and matched to one another.

17. The proportional valve of claim 16, **characterized in that** the spring stiffness of the spring element (20) preloading the base element (18) is greater than the spring stiffness of the spring element (19) preloading the valve tappet (17) and **in that** the spring stiffness of the spring element (19) preloading the valve tappet (17) is greater than the spring stiffness of the spring element (16) preloading the diaphragm disk (10).

18. The proportional valve of claim 3 or any further claim being directly or indirectly dependent from claim 3, **characterized in that** the valve (1) further has a pressure regulator (6) for setting the pressure present at a pneumatic inlet (33) of the pilot valve (31).

## Revendications

1. Soupape proportionnelle (1), en particulier pour l'actionnement d'un robinet pneumatique, la soupape (1) comprenant un boîtier (15), un organe d'actionnement (2), un raccord d'air comprimé (5) pour le raccordement d'une alimentation en air comprimé, un raccord de travail (4) et un raccord d'évacuation d'air (3),
dans laquelle la soupape (1) comprend trois éléments de soupape (7, 8, 9) montés les uns à la suite des autres et respectivement déplaçables dans une direction axiale, notamment
- un premier élément de soupape (7) actionné par l'organe d'actionnement (2),
- un deuxième élément de soupape (8) actionné par le premier élément de soupape (7), et
- un troisième élément de soupape (9) actionné par le deuxième élément de soupape (8),
dans laquelle, dans une position de base de la soupape (1), le premier élément de soupape (7) est espacé du deuxième élément de soupape (8) et le deuxième élément de soupape (8) est espacé du troisième élément de soupape (9), et dans laquelle un premier siège d'étanchéité (25) agissant entre le premier élément de soupape (7) et le deuxième élément de soupape (8) et un deuxième siège d'étanchéité (26) agissant entre le troisième élément de soupape (9) et le boîtier (15) sont conçus et disposés de telle façon dans la soupape (1),
que lors d'une modification de la position du premier élément de soupape (7) par l'organe d'actionnement (2) et par conséquent d'une modification en cascade des positions axiales des premier, deuxième et troisième éléments de soupape (7, 8, 9), différents états de commutation peuvent être réglés pour la purge du raccord de travail (4) par connexion de celui-ci au raccord d'évacuation d'air (3), pour l'aération du raccord de travail (4) par connexion de celui-ci au raccord d'air comprimé (5), et pour le maintien d'une pression appliquée au raccord de travail (4) par isolation du raccord de travail (4) par rapport au raccord d'évacuation d'air (3) et au raccord d'air comprimé (5),
**caractérisée en ce que**
l'état de commutation pour le maintien de la pression appliquée au raccord de travail (4) est effectif sur un trajet de déplacement prédéfini par la distance entre la deuxième et le troisième élément de soupape (8, 9), donnée dans la position de base.

2. Soupape proportionnelle selon la revendication 1
**caractérisée en ce que**
l'organe d'actionnement (2) travaille selon un principe hydraulique, pneumatique ou électromécanique.

3. Soupape proportionnelle selon la revendication 1,
**caractérisée en ce que**
l'organe d'actionnement (2) est conçu comme une soupape pilote pneumatique (31), laquelle coopère avec le premier élément de soupape (7) par le biais d'une chambre de pression de commande (14) et comporte de préférence un convertisseur à flexion piézoélectrique (35) .

4. Soupape proportionnelle selon la revendication 3,
**caractérisée en ce que**
la premier élément de soupape (7) est formé par un disque de diaphragme (10) avec un arbre de disque de diaphragme (11) s'étendant dans la direction axiale et présentant un alésage axial (12), le disque de diaphragme (10) étant précontraint de façon élastique dans une direction orientée vers la chambre de pression de commande (14), tout en se trouvant en liaison active avec un premier diaphragme (13) pour la modification de sa position axiale, celui-ci étant sollicité unilatéralement par la pression de commande régnant dans la chambre de pression de commande (14).

5. Soupape proportionnelle selon la revendication 4,
**caractérisée en ce que**
le deuxième élément de soupape (8) est formé par un poussoir de soupape (17) précontraint élastiquement dans une direction orientée vers le premier élément de soupape (7), lequel est espacé de l'arbre de disque de diaphragme (11) ou s'applique sur celui-ci, en fonction de la position axiale du premier élément de soupape (7), le premier siège d'étanchéité (25) étant formé dans la surface de contact entre l'arbre de disque de diaphragme (11) et le poussoir de soupape (17) .

6. Soupape proportionnelle selon les revendications 4 et 5,
**caractérisée en ce que**
le troisième élément de soupape (9) est formé par un élément de socle (18), lequel est précontraint élastiquement contre un deuxième siège d'étanchéité (26) dans une direction orientée vers le poussoir de soupape (17), et peut être soulevé du deuxième siège d'étanchéité (26) par déplacement axial du poussoir de soupape (17) appliqué sur l'élément de socle (18).

7. Soupape proportionnelle selon l'une des revendications précédentes,
**caractérisée en ce que**
une surface supérieure (24, 27) formant le premier et/ou le deuxième siège d'étanchéité et/ou coopérant avec celui-ci/ceux-ci, pour le réglage du taux de fuite et/ou l'amélioration du comportement de régulation, est constituée d'un matériau polymère.

8. Soupape proportionnelle selon l'une des revendications 5 à 7,
**caractérisée en ce que**
le raccord d'évacuation d'air (3) débouche sur une chambre d'évacuation d'air (22) ventilée durablement de la soupape (1), laquelle est reliée fluidiquement au raccord de travail (4) par le biais de l'alésage axial (12) de l'arbre de disque de diaphragme (11) lorsque l'arbre de disque de diaphragme (11) ne s'applique pas sur le poussoir de soupape (17), et laquelle est séparée fluidiquement du raccord de travail (4) lorsque l'arbre de disque de diaphragme (11) s'applique étroitement sur le poussoir de soupape (17) .

9. Soupape proportionnelle selon la revendication 8,
**caractérisée en ce que**
la chambre d'évacuation d'air (22) est délimitée par le premier diaphragme (13) et par un deuxième diaphragme (21), l'arbre de disque de diaphragme (11) s'étendant axialement à travers le deuxième diaphragme (21) avec son extrémité libre.

10. Soupape proportionnelle selon la revendication 9,
**caractérisée en ce que**
une chambre de pression de travail (23) reliée au raccord de travail (4) de la soupape (1) est délimitée par le deuxième diaphragme (21) et le deuxième siège d'étanchéité, la chambre de pression de travail (23) est soit reliée fluidiquement au raccord d'air comprimé (5) ou au raccord d'évacuation d'air (3), soit séparée du raccord d'air comprimé (5) et du raccord d'évacuation d'air (3), en fonction de la position du disque de diaphragme (10), du poussoir de soupape (17) et de l'élément de socle (18).

11. Soupape proportionnelle selon l'une des revendications 4 à 10,
**caractérisée en ce que**
des éléments élastiques (16, 20) précontraignant le disque de diaphragme (10) et/ou l'élément de socle (18) s'appuient respectivement sur le boîtier (15) de la soupape (1).

12. Soupape proportionnelle selon la revendication 11,
**caractérisée en ce que**
le disque de diaphragme (10) est précontraint par au moins trois éléments élastiques (16) décalés les uns par rapport aux autres selon un angle (α) identique par paires et disposés de façon équidistante par rapport à un axe médian axial (M) du disque de diaphragme (10), lesquels s'appuient sur le boîtier (15) de la soupape (1).

13. Soupape proportionnelle selon la revendication 9 ou toute autre revendication directement ou indirectement dépendante de la revendication 9,
**caractérisée en ce que**
le disque de diaphragme (10), en particulier dans la région de l'arbre de disque de diaphragme (11), est relié au deuxième diaphragme (21), le deuxième diaphragme (21) assurant un support axial du disque de diaphragme (10) guidé axialement.

14. Soupape proportionnelle selon la revendication 6 ou toute autre revendication directement ou indirectement dépendante de la revendication 6,
**caractérisée en ce que**
le poussoir de soupape (17) est précontraint dans la direction vers l'arbre de disque de diaphragme (10) par un ressort (19) appuyé sur l'élément de socle (18) .

15. Soupape proportionnelle selon la revendication 5 ou toute autre revendication directement ou indirectement dépendante de la revendication 5,
**caractérisée en ce que**
le poussoir de soupape (17) non actionné est éloigné de l'élément de socle (18) appliqué sur le deuxième siège d'étanchéité selon une certaine course de déplacement.

16. Soupape proportionnelle selon la revendication 6 ou toute autre revendication directement ou indirectement dépendante de la revendication 6,
**caractérisée en ce que**
les éléments élastiques (16, 19, 20) précontraignant le disque de diaphragme (10), le poussoir de soupape (17) et l'élément de socle (18) présentent des courbes caractéristiques de ressort différentes et coordonnées entre elles.

17. Soupape proportionnelle selon la revendication 16,
**caractérisée en ce que**
la rigidité de ressort de l'élément élastique (20) précontraignant l'élément de socle (18) est supérieure à la rigidité de ressort de l'élément élastique (19) précontraignant le poussoir de soupape (17), et **en ce que** la rigidité de ressort de l'élément élastique (19) précontraignant le poussoir de soupape (17) est supérieure à la rigidité de ressort de l'élément élastique (16) précontraignant le disque de diaphragme (10) .

18. Soupape proportionnelle selon la revendication 3 ou toute autre revendication directement ou indirectement dépendante de la revendication 3,
**caractérisée en ce que**
la soupape (1) comprend en outre un régulateur de pression (6) destiné à régler la pression appliquée à une entrée pneumatique (33) de la soupape pilote (31).
